# EUROPEAN PATENT APPLICATION

(11) **EP 2 985 723 A1**
(43) Date of publication of application: **17.02.2016**
(21) Application number: 15179507.7
(22) Date of filing: 03.08.2015
(51) Int. Cl.: G06Q 10/10, G06F 3/048

(54) **METHOD FOR ADDING APPLICATION SUPERSCRIPT AND DEVICE AND DEVICE THEREOF**

(30) Priority: 15.08.2014 CN 201410401486
(71) Applicant: Xiaomi Inc., Beijing 100085 (CN)
(72) Inventor: YAN, Zheng, 100085 BEIJING (CN); WANG, Ying, 100085 BEIJING (CN); ZHU, Shaoping, 100085 BEIJING (CN)
(74) Representative: Delumeau, François Guy

(57) **Abstract**

A method for adding an application superscript and a device thereof are provided. The method for adding an application superscript comprises: detecting (101) whether a notification bar receives a notification message, the notification message being sent from an application to the notification bar after receiving an unread message; determining (102), in case of detecting the notification bar has received a notification message, the quantity of unread messages received by the application corresponding to the notification message according to the notification message; and updating and displaying (103) a superscript value of the application icon according to the quantity of unread messages.

## Description

### Technical Field

The present disclosure generally relates to the field of computer technology, and more particularly, to a method for adding an application superscript and a device thereof.

### BACKGROUND

In order to facilitate a user to use an application in a smart mobile phone, generally the icon of the application installed is added on a desktop of the smart mobile phone; and in order to help a user to learn there are unread messages in the application by means of the icon, it is necessary to provide a method for marking on the icon that unread messages exists in the application.

At the time of marking unread messages of an application on its application icon, the operating system of a smart mobile phone may monitor, on a specific interface, unread messages of system applications, accumulate the quantity of unread messages of system applications according to unread messages monitored, take the quantity of unread messages as the superscript values of the system applications, and add the superscript values onto application icons.

### SUMMARY

In order to solve the problem of related technologies in which a superscript cannot be added for a non-system application, the present disclosure provides a method for adding an application superscript and a device thereof. The technical solution is as below:

According to a first aspect, the invention relates to a method for adding an application superscript, comprising:
detecting whether a notification bar receives a notification message, the notification message being sent by an application to the notification bar after receiving an unread message;
determining, in case of detecting the notification bar has received a notification message, the quantity of unread messages received by an application corresponding to the notification message according to the notification message; and
updating and displaying a superscript value of the application icon according to the quantity of unread messages.

The man skilled in the art will understand that an "unread message" in the context of the invention is also sometimes referred to as a "push message". Such a push or unread message is generally received by the application from the corresponding server, which triggers the application sending a notification message to the bar to remind the user to read.

In a particular embodiment, the step of determining the quantity of unread messages received by an application corresponding to the notification message according to the notification message includes:
detecting whether an application corresponding to the notification message is a specific application, a notification message sent by the specific application to the notification bar being generated by the specific application by using unread messages received within a statistical time range and sent to the notification bar; and
determining the quantity of unread messages as 1 according to the notification message if the application corresponding to the notification message is not the specific application upon detection.

In a particular embodiment, the step of updating and displaying a superscript value of the application icon according to the quantity of unread messages includes:
acquiring an accumulative superscript value by accumulating 1 to a superscript value of the application; and
updating the superscript value of the application icon and displaying as the accumulative superscript value.

In a particular embodiment, the step of determining the quantity of unread messages received by an application corresponding to the notification message according to the notification message further includes:
extracting a quantity keyword from the notification message if the application corresponding to the notification message is the specific application upon detection, the quantity keyword being used to indicate the quantity of unread messages received by the application; and
determining the quantity of unread messages as indicated in the notification message according to the quantity keyword.

In a particular embodiment, the step of updating and displaying a superscript value of the application icon according to the quantity of unread messages includes:
acquiring an additive superscript value by adding the superscript value of the application with the quantity of unread messages; and
updating the superscript value of the application icon and displaying as the additive superscript value.

In a particular embodiment, it is to judge whether unread messages corresponding to the notification message have been read when the notification message is deleted from the notification bar;
it is to acquire a subtractive superscript value by subtracting the quantity of unread messages read from the superscript value of the application corresponding to the notification message if unread messages corresponding to the notification message have been read upon detection; and it is to update the superscript value of the application icon and display as the subtractive superscript value; and
it is to maintain the superscript value of the application icon unchanged if unread messages corresponding to the notification message are not read upon judgment.

According to a second aspect, the invention relates to a device for adding an application superscript, including:
a first detection module, configured to detect whether a notification bar receives a notification message, the notification message being sent by an application to the notification bar after receiving an unread message;
a determination module, configured to determine, in case that the first detection module detects the notification bar has received a notification message, the quantity of unread messages received by an application corresponding to the notification message according to the notification message; and
a first display module, configured to update and display a superscript value of the application icon according to the quantity of unread messages determined by the determination module.

In a particular embodiment, the determination module includes:
a first detection submodule, configured to detect whether an application corresponding to the notification message is a specific application, a notification message sent by the specific application to the notification bar being generated by the specific application by using unread messages received within a statistical time range and sent to the notification bar; and
a first determining submodule, configured to determine the quantity of unread messages as 1 according to the notification message if the first detection submodule detects that the application corresponding to the notification message is not the specific application.

In a particular embodiment, the first display module includes:
a first calculating submodule, configured to acquire an accumulative superscript value by accumulating 1 to a superscript value of the application; and
a first display submodule, configured to update the superscript value of the application icon and display as the accumulative superscript value.

Optionally, the determination module further includes:
an extracting submodule, configured to extract a quantity keyword from the notification message if the first detection submodule detects that the application corresponding to the notification message is the specific application, the quantity keyword being used to indicate the quantity of unread messages received by the application; and
a second determining submodule, configured to determine the quantity of unread messages as indicated in the notification message according to the quantity keyword.

In a particular embodiment, the first display module includes:
a second calculating submodule, configured to acquire an additive superscript value by adding the superscript value of the application with the quantity of unread messages; and
a second display submodule, configured to update the superscript value of the application icon and display as the additive superscript value.

In a particular embodiment, the device further includes:
a second detection module, configured to detect whether unread messages corresponding to the notification message have been read when the notification message is deleted from the notification bar; and
a second display module, configured to acquire a subtractive superscript value by subtracting the quantity of unread messages read from the superscript value of the application corresponding to the notification message if the second detection module detects that unread messages corresponding to the notification message have been read, and update the superscript value of the application icon and display as the subtractive superscript value.

According to a third aspect, the invention relates to a device for adding an application superscript, including:
a processor; and
a memory configured to store executable instructions from the processor;
wherein, the processor being configured to:
detect whether a notification bar receives a notification message, the notification message being sent by an application to the notification bar after receiving an unread message;
determine, in case of detecting the notification bar has received a notification message, the quantity of unread messages received by an application corresponding to the notification message according to the notification message; and
update and display a superscript value of the application icon according to the quantity of unread messages.

In one particular embodiment, the steps of the method for adding an application superscript are determined by computer program instructions.

Consequently, according to a fourth aspect, the invention is also directed to a computer program for executing the steps of a method for adding an application superscript when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the disclosure may have the following beneficial effects:

By determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

It will be appreciated that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for adding an application superscript according to an exemplary embodiment.
Fig. 2A is a flow chart showing a method for adding an application superscript according to another exemplary embodiment.
Fig. 2B is an interface diagram displaying a notification bar according to an exemplary embodiment.
Fig. 2C is an interface diagram displaying a notification message corresponding to an unspecific application in a notification bar according to an exemplary embodiment.
Fig. 2D is an interface diagram displaying a notification message corresponding to a specific application in a notification bar according to an exemplary embodiment.
Fig. 2E is a schematic diagram showing an accumulative superscript value of an application icon according to an exemplary embodiment.
Fig. 2F is a schematic diagram showing an accumulative superscript value of an application icon according to another exemplary embodiment.
Fig. 2G is a schematic diagram of subtracting a reading quantity from the superscript value of an application icon according to an exemplary embodiment.
Fig. 2H is a schematic diagram of subtracting a reading quantity from the superscript value of an application icon according to another exemplary embodiment.
Fig. 3A is a flow chart showing a method for adding an application superscript according to a further exemplary embodiment.
Fig. 3B is a schematic diagram of adding the superscript value of the application icon with the quantity of unread messages according to an exemplary embodiment.
Fig. 3C is a schematic diagram of adding the superscript value of the application icon with the quantity of unread messages according to another exemplary embodiment.
Fig. 3D is a schematic diagram of subtracting a reading quantity from the superscript value of the application icon according to an exemplary embodiment.
Fig. 3E is a schematic diagram of subtracting a reading quantity from the superscript value of the application icon according to another exemplary embodiment.
Fig. 4 is a block diagram of a device for adding an application superscript according to an exemplary embodiment.
Fig. 5 is a block diagram of a device for adding an application superscript according to another exemplary embodiment.
Fig. 6 is a block diagram of a device for adding an application superscript according to a further exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

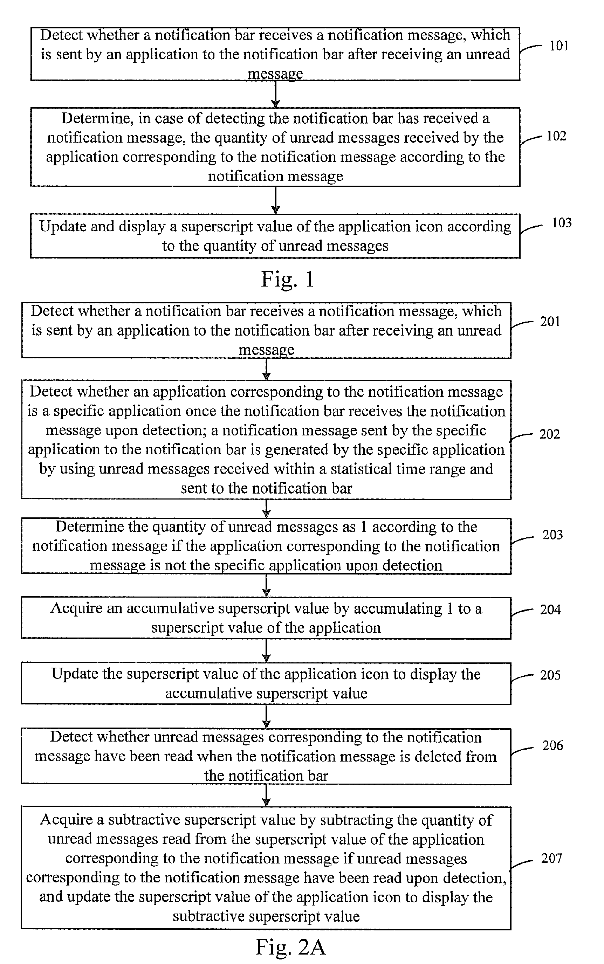

Fig. 1 is a flow chart showing a method for adding an application superscript according to an exemplary embodiment. As shown in Fig. 1, the method for adding an application superscript which means a corner mark on upper or lower corner of an icon is applied to an electronic equipment, including a smart mobile phone, a tablet computer, a smart television, an e-book reader, a laptop computer, a desktop computer or the like. The method for adding an application superscript comprises following steps.

Step 101 is a step of detecting whether a notification bar receives a notification message, which is sent by an application to the notification bar after the application receives an unread message;

The application herein may be a system application originally installed in the electronic equipment system, or a non-system application installed by users.

The notification bar may be arranged on one side of the screen of the electronic equipment, for example, the upper side or left side of the screen of the electronic equipment. The notification bar may be used to display a prompt message (e.g., a notification message, etc.) indicating new messages exist in various applications of the electronic equipment. Under a use status of a non full-screen status, the notification bar may be always displayed on one side of the screen of the electronic equipment, unaffected by display interfaces of other running applications.

In order to notify a user there are unread messages, the application may send, after receiving the unread messages, a notification message to the notification bar of the electronic equipment. The notification message is sent to the notification bar after the application receives the unread messages.

Step 102 is a step of determining, in case of detecting the notification bar has received a notification message, the quantity of unread messages received by the application corresponding to the notification message according to the notification message.

The notification message may carry an application identifier, and accordingly, it is possible to determine the application that the notification message is sent from according to the application identifier of the notification message.

Step 103 is a step of updating and displaying a superscript value of the application icon according to the quantity of unread messages.

In conclusion, in the method for adding an application superscript provided by the embodiments,, by determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

Regarding some applications, every time these applications receive an unread message, they will send a notification message to the notification bar, each notification message sent by an application representing an unread message existing in the application. Such kind of applications are referred to as unspecific applications, and it is described hereinafter according to Fig. 2A to update superscript values of these unspecific applications according to their notification messages.

Fig. 2A is a flow chart showing a method for adding an application superscript according to another exemplary embodiment. As shown in Fig. 2A, the method for adding an application superscript is applied to an electronic equipment, including a smart mobile phone, a tablet computer, a smart television, an e-book reader, a laptop computer, a desktop computer or the like. The method for adding an application superscript includes following steps.

Step 201 is a step of detecting whether a notification bar receives a notification message, which is sent by an application to the notification bar after the application receives an unread message;

The application as recited herein may be a system application originally installed in an electronic equipment system, or a non-system application installed by users.

The notification bar may be arranged on one side of the screen of the electronic equipment, for example, the upper side or left side of the screen of the electronic equipment. The notification bar may be used to display a prompt message (e.g., a notification message, etc.) indicating new messages exist in various applications of the electronic equipment. Under a use status of a non full-screen status, the notification bar may be always displayed on one side of the screen of the electronic equipment, unaffected by display interfaces of other running applications.

In order to let a user know there are unread messages, the application may send, after receiving the unread messages, a notification message to the notification bar of the electronic equipment. The notification message is sent to the notification bar after the application receives the unread messages.

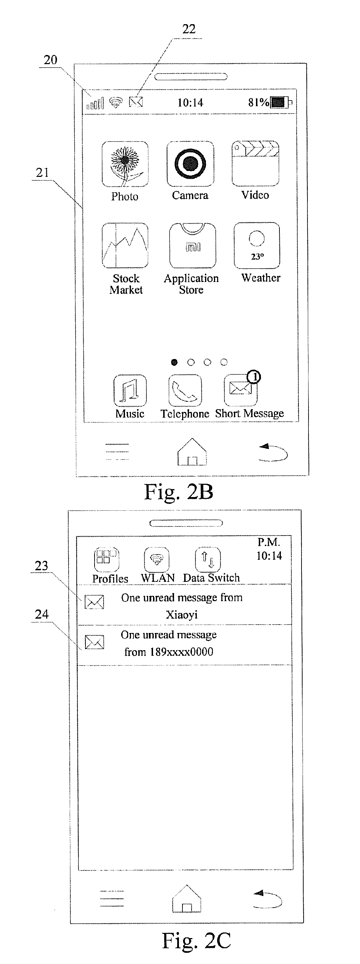

Please refer to Fig. 2B, which is an interface diagram displaying a notification bar according to an exemplary embodiment. In Fig. 2B, the notification bar 20 is arranged on the top of the screen 21 of the electronic equipment. And the notification bar 20 may display a notification message (e.g., a notification message 22 of a short message) once it receives it.

Step 202 is a step of detecting whether an application corresponding to the notification message is a specific application once the notification bar receives the notification message. The notification message sent by the specific application to the notification bar is generated by the specific application by using unread messages that the specific application receives within a statistical time range and sent to the notification bar.

The notification message may carry an application identifier, accordingly, it is possible to determine which application sent the notification message according to the application identifier of the notification message.

Once the notification bar receives a notification message upon detection, it is possible to determine the application sending the notification message.

In practice, a part of applications will send, every time they receive an unread message, a notification message generated according to the unread message to the notification bar. Another part of applications will generate, after a period of time, a notification message according to unread messages acquired within this period of time, called hereafter "statistical unread messages", and send the notification message to the notification bar. In this scenario, the number of received unread messages are counted.

Thus it can be known that the quantity of unread messages corresponding to notification messages corresponding to some applications usually is one, while the quantity of unread messages corresponding to notification messages corresponding to other applications usually is at least one (for example, one, two or more). Herein the latter applications are referred to as specific applications, and the former applications are referred to as unspecific applications, where:

- a so-called "specific application" refers to an application containing multiple unread messages received into a notification message, which the specific application sends to the notification bar. For example, upon receiving three messages the notification bar doesn't display three notification messages but only one notification message to you such as "You have received three messages".

Regarding specific applications, the statistical time range mentioned herein may be a time range corresponding to a predefined time interval.

Optionally, the specific application makes statistics of unread messages received at predefined time intervals, generate a notification message according to these unread messages and send the notification message to the notification bar. Namely, the quantity of unread messages corresponding to the notification message is equal to that of actually statistical unread messages within the statistical time range.

In a possible case, when the quantity of statistical unread messages acquired within the statistical time range is 1, the quantity of unread messages corresponding to the notification message is also 1; when the quantity of statistical unread messages acquired within the statistical time range is 2 or even more, the quantity of unread messages corresponding to the notification message is also 2 or even more.

In practical application, regarding unspecific applications and specific applications, the methods for determining the quantity of unread messages received by corresponding applications according to notification messages received by the notification bar are different. Therefore, in order to know the quantity of unread messages received by an application corresponding to a notification message, it may be further detected whether the application is a specific application.

Optionally, a specific application may be stored, for example in a table. When it is necessary to detect whether the application is a specific application, it is sufficient to detect whether the application is stored, and if yes, the application is considered to be a specific application.

In practical application, it may be known the content of notification messages after the notification bar is dropped down (or unfold downward), the same unspecific application may be corresponding to a plurality of notification messages, and each notification message is used to indicate that the unspecific application receives each unread message. For example, please refer to Fig. 2C, which is an interface diagram displaying a notification message corresponding to an unspecific application in the notification bar according to an exemplary embodiment. In Fig. 2C, both the notification message 23 and the notification message 24 are notification messages corresponding to an unspecific application (Short Messaging Service, or Short Message). The notification message 23 indicates that the application (Short Message) has an unread message sent by Xiaoyi and the notification message 24 indicates that the application (Short Message) has an unread message sent by a number "189XXXX0000".

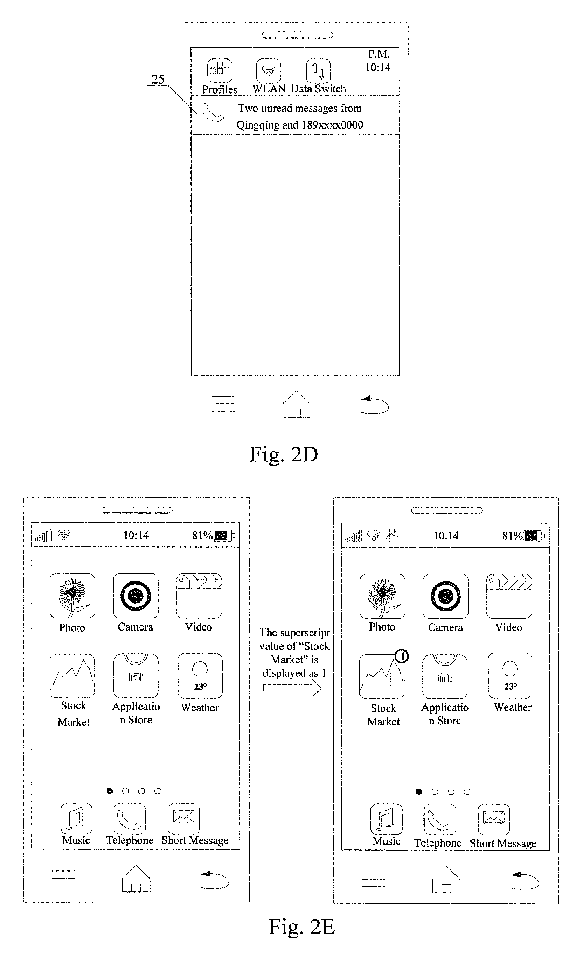

The same specific application may be corresponding to only one notification message which indicates the specific application receives one or more unread messages. For example, please refer to Fig. 2D, which is an interface diagram displaying a notification message corresponding to a specific application in a notification bar according to an exemplary embodiment. In Fig. 2D, the notification message 25 is a notification message corresponding to a specific application (incoming call), the notification message 25 indicates that the application (incoming call) has two missed calls, one is dialed by Qingqing, and the other one is dialed by a number "189XXXX0000".

Step 203 is a step for determining the quantity of unread messages as 1 according to the notification message if the application corresponding to the notification message is not the specific application upon detection.

If the application corresponding to the notification message is not a specific application upon detection, this signifies that the application corresponding to the notification message is an unspecific application, which will send a notification message to the notification bar every time when it receives an unread message, i.e., each notification message is corresponding to one unread message, and at the moment the quantity of unread messages determined by the notification message is 1.

In Step 204, it is to acquire an accumulative superscript value by accumulating 1 to a superscript value of the application.

Optionally, it is to set the superscript value to zero by default if the application has no superscript value (i.e., the application has no unread message), and then the superscript value of the application is accumulated by one, thus acquiring an accumulative superscript value 1.

Optionally, it is to acquire an accumulative superscript value by accumulating 1 to a superscript value of the application (if present). For example, if the original superscript value of the application is 3, the accumulative superscript value is 4.

In Step 205, it is to update the superscript value of the application icon and display as the accumulative superscript value.

After acquiring the accumulative superscript value, it is possible to update the superscript value of the application and display as the accumulative superscript value.

Optionally, it is to directly add the accumulative superscript value onto the application icon if the application icon does not have a superscript value. Please refer to Fig. 2E, which is a schematic diagram showing an accumulative superscript value of an application icon according to an exemplary embodiment. In Fig. 2E, the icon of the application (Stock Market) has no superscript value, when an accumulative superscript value (1) is acquired by calculation, it is to display the superscript value (1) on the icon of the application (Stock Market).

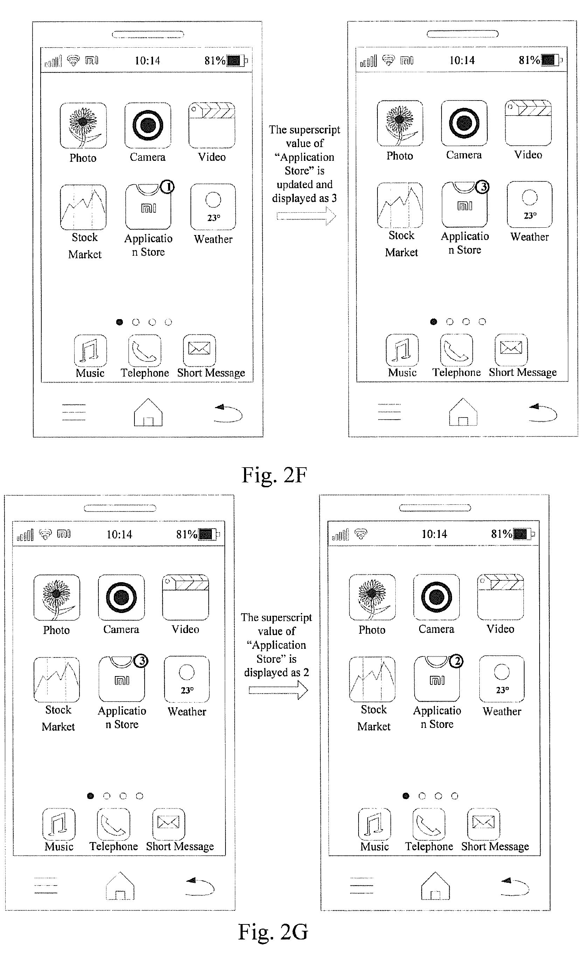

Optionally, it is to update the original superscript value of an application icon (if present) and display as an accumulative superscript value. Please refer to Fig. 2F, which is a schematic diagram showing an accumulative superscript value of an application icon according to another exemplary embodiment. In Fig. 2F, the icon of the application (Application Store) has a superscript value (1); when an accumulative superscript value (3) is acquired by calculation, the superscript value (1) of the icon of the application (Application Store) may be updated and displayed as the accumulative superscript value (3).

Optionally, a superscript value may be either marked with Arabic numerals or Chinese numerals. And a superscript value may be in a shape of a circle or a rectangle, etc. The embodiment does not limit the markup language or shape of a superscript value.

In practical application, the superscript value of an application may be reduced when a user reads unread messages of the application, please refer to Steps 206 and 207 for details.

In Step 206, it is to detect whether unread messages corresponding to the notification message have been read when the notification message is deleted from the notification bar.

In a certain case, if a notification message is a notification message of an unspecific application and one among unread messages of the unspecific application has been read by a user, the notification message corresponding to the unread message may be deleted from the notification bar.

In another case, if a notification message is a notification message of a specific application and one among unread messages of the unspecific application has been read by a user, the notification message corresponding to the unread message may also be deleted from the notification bar. However, it shall be noted that the notification message may also be deleted if the notification message is corresponding to at least two unread messages and the user has only read one of the unread messages.

In a further case, when a user clicks on or selects a certain notification message in the notification bar, the notification message may be deleted from the notification bar.

Therefore, when a notification message is deleted from the notification bar, it is necessary to detect whether the unread message corresponding to the application has been read in order that the superscript value of the application corresponding to the notification message is updated according to the actual situation.

In Step 207, it is to acquire a subtractive superscript value by subtracting the quantity of unread messages read from the superscript value of the application corresponding to the notification message if unread messages corresponding to the notification message have been read upon detection, and to update the superscript value of the application icon and display as the subtractive superscript value.

It is to acquire a subtractive superscript value by subtracting the quantity of unread messages read (1) from the superscript value of the application corresponding to the notification message if the notification message is the notification message of an unspecific application and unread messages corresponding to the notification message have been read upon detection, and to update the superscript value of the application icon and display as the subtractive superscript value. Namely, when the notification message of the unspecific application is deleted and the unread message of the unspecific application has been read upon detection, the superscript value of the unspecific application is directly subtracted by 1 and then the subtractive value is displayed.

In a certain case, when the original superscript value of the unspecific application is greater than 1, after 1 is subtracted from the superscript value, the superscript value is updated and continued to be displayed on the icon of the unspecific application. Please refer to Fig. 2G, which is a schematic diagram of subtracting a reading quantity from the superscript value of an application icon according to an exemplary embodiment. In Fig. 2G, the icon of the application (Application Store) has a superscript value (3), a subtractive superscript value (2) is acquired by subtracting 1 from the superscript value (3), and the superscript value (2) is displayed on the icon of the application (Application Store).

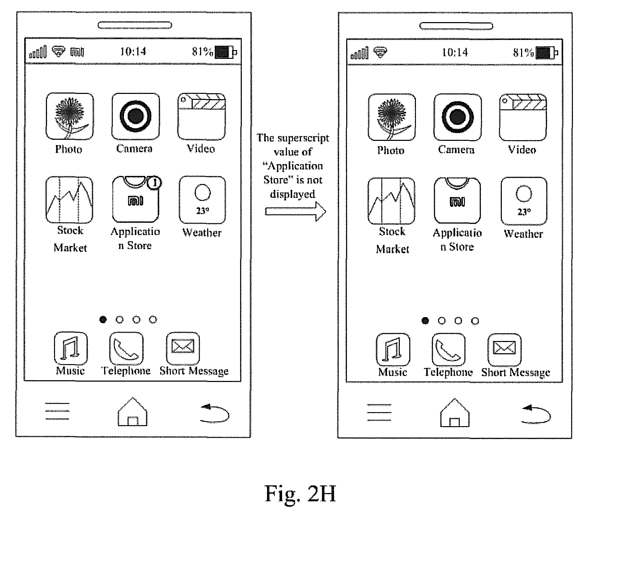

In another case, when the original superscript value of the unspecific application is equal to 1, after 1 is subtracted from the superscript value, no superscript value is displayed on the icon of the unspecific application. Please refer to Fig. 2H, which is a schematic diagram of subtracting a reading quantity from the superscript value of an application icon according to another exemplary embodiment. In Fig. 2H, the icon of the application (Application Store) has a superscript value (1), a subtractive superscript value of 0 is acquired by subtracting 1 from the superscript value 1, i.e., the application (an application store) has no unread message, at the moment, no superscript value is displayed on the icon of the application (Application Store).

In conclusion, in the method for adding an application superscript provided by the embodiments, by determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

In the method for adding an application superscript provided by the embodiments, by detecting whether unread messages corresponding to the notification message have been read when the notification message is deleted from the notification bar, acquiring a subtractive superscript value by subtracting the quantity of unread messages read from the superscript value of the application corresponding to the notification message if the unread messages corresponding to the notification message have been read, and updating the superscript value of the application icon and displaying as the subtractive superscript value, it is possible to solve the problem of how to update and display the subtractive superscript value according to the notification message in the notification bar, achieving the effect of determining the update of the superscript value of the application icon according to the notification message deleted in the notification bar and the quantity of unread messages read.

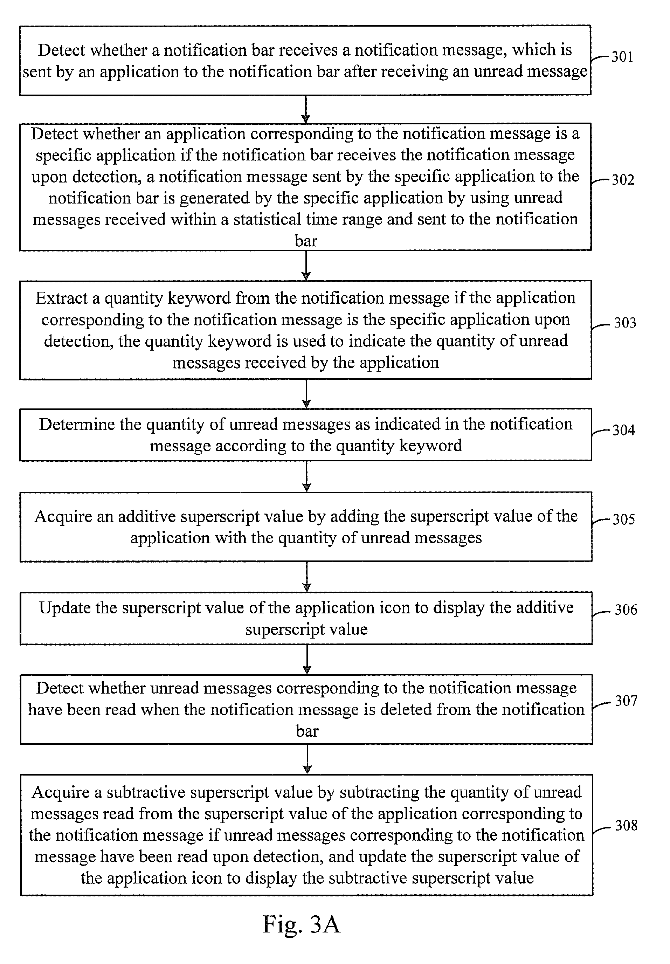

Regarding some applications, they will generate notification messages according to statistical unread messages at predefined time intervals and send these notification messages to the notification bar, i.e., each notification message corresponding to the applications represents one or more unread messages of the applications. These applications are referred to as specific applications. It is described hereinafter according to Fig. 3A to update superscript values of these specific applications according to their notification messages.

Fig. 3A is a flow chart showing a method for adding an application superscript according to a further exemplary embodiment. As shown in Fig. 3A, the method for adding an application superscript is applied to an electronic equipment, including a smart mobile phone, a tablet computer, a smart television, an e-book reader, a laptop computer, a desktop computer or the like. The method for adding an application superscript includes following steps.

Step 301is a step for detecting whether a notification bar receives a notification message, which is sent by an application to the notification bar after receiving an unread message;

The application as recited herein may be a system application originally installed in an electronic equipment system, or a non-system application installed by users.

The notification bar may be arranged on one side of the screen of the electronic equipment, for example, the upper side or left side of the screen of the electronic equipment. The notification bar may be used to display a prompt message (e.g., a notification message, etc.) indicating new messages exist in various applications of the electronic equipment. Under a use status instead of a full-screen status, the notification bar may be always displayed on one side of the screen of the electronic equipment, unaffected by display interfaces of other running applications.

In order to let a user know there are unread messages, the application may send, after receiving the unread messages, a notification message to the notification bar of the electronic equipment. The notification message is sent to the notification bar after the application receives the unread messages.

Still refer to Fig. 2B, in which the notification bar 20 is arranged on the top of the screen 21 of the electronic equipment.

In Step 302, it is to detect whether an application corresponding to the notification message is a specific application if the notification bar receives the notification message upon detection. The notification message sent by the specific application to the notification bar is generated by the specific application by using unread messages received within a statistical time range and sent to the notification bar.

The notification message generally carries an application identifier, accordingly, it is possible to determine from which application the notification message is sent according to the application identifier of the notification message.

Once the notification bar receives a notification message upon detection, it is possible to determine the application sending the notification message.

In practical application, a part of applications will send, every time when they receive an unread message, a notification message generated according to the unread message to the notification bar. Another part of applications will generate, after a period of time, a notification message according to statistical unread messages acquired within this period of time, and send the notification message to the notification bar.

Thus it can be known that the quantity of unread messages corresponding to notification messages corresponding to some applications usually is one, while the quantity of unread messages corresponding to notification messages corresponding to other applications usually is at least one (for example, one, two or more). Herein the latter applications are referred to as specific applications, and the former applications are referred to as unspecific applications.

Regarding to specific applications, the statistical time range mentioned herein may be a time range corresponding to a predefined time interval.

Optionally, the specific application makes statistics of unread messages received at predefined time intervals, generate a notification message according to these unread messages and send the notification message to the notification bar. Namely, the quantity of unread messages corresponding to the notification message is equal to that of actually statistical unread messages within the statistical time range.

In a possible case, when the quantity of statistical unread messages acquired within the statistical time range is 1, the quantity of unread messages corresponding to the notification message is also 1; when the quantity of statistical unread messages acquired within the statistical time range is 2 or even more, the quantity of unread messages corresponding to the notification message is also 2 or even more.

In practical application, regarding unspecific applications and specific applications, the methods for determining the quantity of unread messages received by corresponding applications according to notification messages received by the notification bar are different. Therefore, in order to know the quantity of unread messages received by an application corresponding to a notification message, it may be further detected whether the application is a specific application.

Optionally, a specific application may be stored, for example in a table. When it is necessary to detect whether the application is a specific application, it is only to detect whether the application is a specific application stored, if yes, this signifies that the application is a specific application.

In Step 303, it is to extract a quantity keyword from the notification message if the application corresponding to the notification message is the specific application upon detection. The quantity keyword is used to indicate the quantity of unread messages received by the application.

If the application corresponding to the notification message is a specific application upon detection, this signifies that the application corresponding to the notification message is a specific application, which will, at predefined time intervals, make statistics of unread messages of the application within a statistical time range corresponding to the time interval, generate a notification message according to unread messages received within the statistical time range, and send the notification message to the notification bar, i.e., each notification message is corresponding to one, two or even more unread messages, and at the moment the quantity of unread messages determined by the notification message may be one, two or even more.

For example, if one unread message is received within the statistical time range, the quantity of unread messages corresponding to the notification message generated according to unread messages received within the statistical time range is one; for another example, if two unread messages are received within the statistical time range, the quantity of unread messages corresponding to the notification message generated according to unread messages received within the statistical time range is two.

In Step 304, it is to determine the quantity of unread messages as indicated in the notification message according to the quantity keyword.

Optionally, the notification message generated by a specific application generally has a specific code segment for indicating unread messages, i.e., a quantity keyword may be acquired by analysis of the specific code segment. For example, the specific code segment is "message (count=6)", and at the moment the quantity of unread messages received by the application as indicated by the quantity keyword is 6.

In practical application, the quantity keyword may also be acquired by other means, to which the embodiment makes no restriction.

In Step 305, it is to acquire an additive superscript value by adding the superscript value of the application with the quantity of unread messages.

Optionally, it is to set the superscript value to zero by default if the application has no superscript value (i.e., the application has no unread message), and then the superscript value of the application is added with the quantity of unread messages, thus acquiring an additive superscript value. For example, if the application does not have a superscript value and the quantity of unread messages is 2, the additive superscript value is 2.

Optionally, it is to acquire an additive superscript value by adding the superscript value of the application (if present) with the quantity of unread messages. For example, if the original superscript value of the application is 3 and the quantity of unread messages is 2, the additive superscript value is 5.

In Step 306, it is to update the superscript value of the application icon and display as the additive superscript value.

After acquiring the accumulative superscript value, it is possible to update the superscript value of the application and display as the accumulative superscript value.

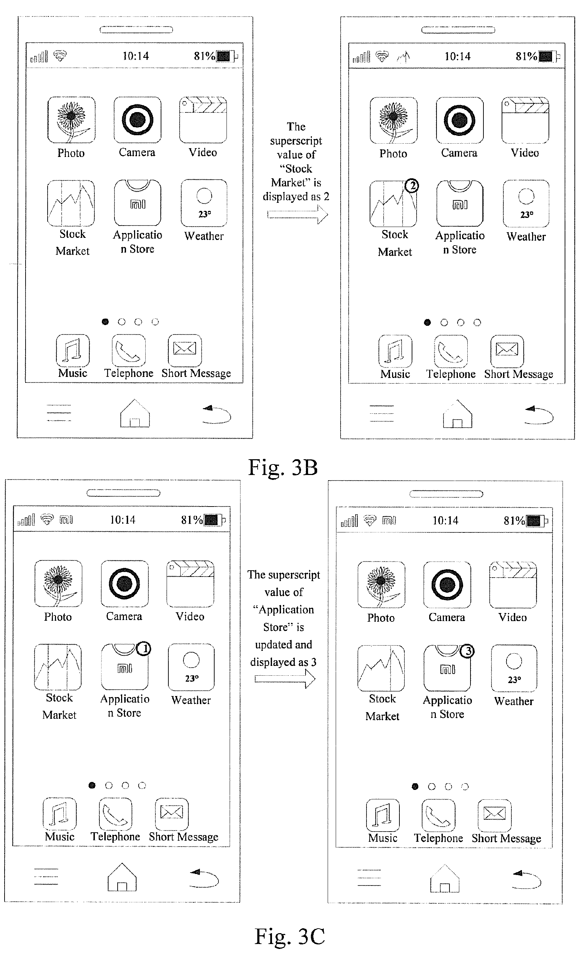

Optionally, it is to directly add the accumulative superscript value onto the application icon if the application icon does not have a superscript value. Please refer to Fig. 3B, which is a schematic diagram of adding the superscript value of an application icon with the quantity of unread messages according to an exemplary embodiment. In Fig. 3B, the icon of the application (Stock Market) has no superscript value, when the quantity of unread messages is 2 by calculation, it is to display the superscript value (2) on the icon of the application (Stock Market).

Optionally, it is to update the original superscript value of an application icon (if present) and display as an accumulative superscript value. Please refer to Fig. 3C, which is a schematic diagram of adding the superscript value of an application icon with the quantity of unread messages according to another exemplary embodiment. In Fig. 3C, the icon of the application (Application Store) has a superscript value (1); when the quantity of unread messages is 2 by calculation, the superscript value (1) of the icon of the application (Application Store) is added with 2, thus acquiring an additive superscript value (3), and the superscript value is updated and displayed as 3.

Optionally, a superscript value may be either marked with Arabic numerals or Chinese numerals. And a superscript value may be shaped like a circle or a rectangle, etc. The embodiment does not limit the markup language or shape of a superscript value.

In practical application, the superscript value of an application may be reduced when a user has read unread messages of the application, please refer to Steps 307 and 308 for details.

In Step 307, it is to detect whether unread messages corresponding to the notification message have been read when the notification message is deleted from the notification bar.

In a certain case, if a notification message is a notification message of an unspecific application and an unread message of the unspecific application has been read by a user, the notification message corresponding to the unread message may be deleted from the notification bar.

In another case, if a notification message is a notification message of a specific application and an unread message of the specific application has been read by a user, the notification message corresponding to the unread message may also be deleted from the notification bar. However, it shall be noted that the notification message may also be deleted if the notification message is corresponding to at least two unread messages and the user has read just one of the unread messages.

In a further case, the notification message may be deleted from the notification bar when a user clicks on or selects a certain notification message in the notification bar.

Therefore, when a notification message is deleted from the notification bar, it is necessary to detect whether the unread message corresponding to the application has been read in order that the superscript value of the application corresponding to the notification message is updated according to the actual situation.

In Step 308, it is to acquire a subtractive superscript value by subtracting the quantity of unread messages read from the superscript value of the application corresponding to the notification message if unread messages corresponding to the notification message have been read upon detection, and to update the superscript value of the application icon and display as the subtractive superscript value.

It is to acquire a subtractive superscript value by subtracting the quantity of unread messages read from the superscript value of the application corresponding to the notification message if the notification message is the notification message of a specific application and at least one unread message corresponding to the notification message has been read upon detection, and to update the superscript value of the application icon and display as the subtractive superscript value. Namely, when the notification message of the specific application is deleted and a plurality of unread messages of the specific application have been read upon detection, the quantity of unread messages is subtracted from the superscript value of the specific application and the subtractive superscript value is updated and displayed.

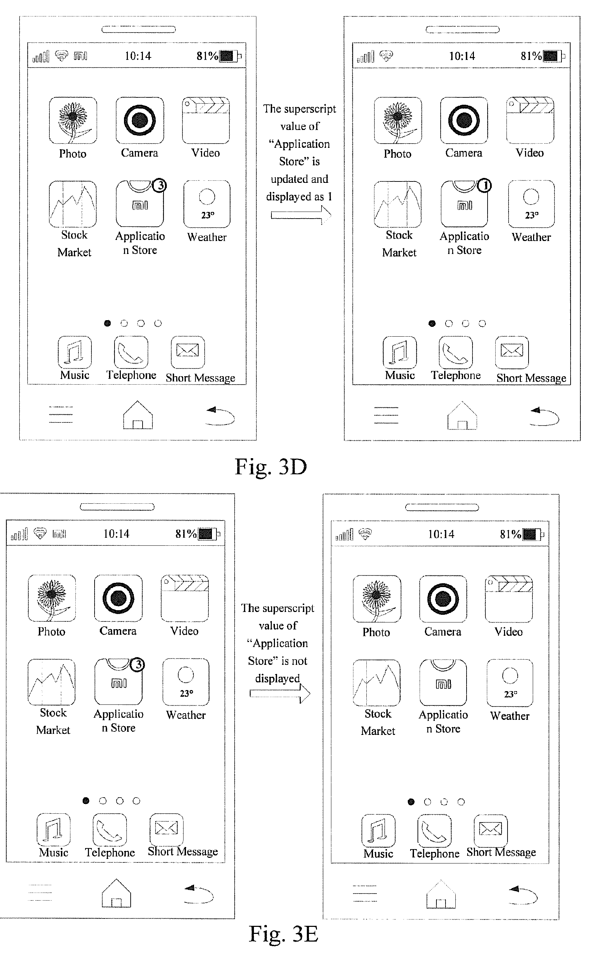

In a certain case, when the original superscript value of the specific application is greater than the quantity of unread messages read, after the quantity of unread messages is subtracted from the superscript value, the subtractive superscript value is updated and continued to be displayed on the icon of the specific application. Please refer to Fig. 3D, which is a schematic diagram of subtracting a reading quantity from the superscript value of an application icon according to an exemplary embodiment. In Fig. 3D, the icon of the application (Application Store) has a superscript value (3); the subtractive superscript value (1) is acquired after two unread messages have been read, the superscript value (3) of the icon of the application (Application Store) is updated and displayed as the subtractive superscript value (1).

In another case, when the original superscript value of the specific application is equal to the quantity of unread messages read, after the quantity of unread messages is subtracted from the superscript value, the subtractive superscript value is not displayed on the icon of the specific application any more. Namely, it is not continued displaying a superscript value on the application icon if a subtractive superscript value 0 is acquired by subtracting the quantity of unread messages read from the superscript value of the application corresponding to the notification message. Please refer to Fig. 3E, which is a schematic diagram of subtracting a reading quantity from the superscript value of an application icon according to another exemplary embodiment. In Fig. 3E, the icon of the application (Application Store) has a superscript value (3); the subtractive superscript value 0 is acquired after three unread messages have been read, at the moment, the icon of the application (Application Store) does not display a superscript value any more.

In conclusion, in the method for adding an application superscript provided by the embodiments , by determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

In the method for adding an application superscript provided by the embodiments, by detecting whether unread messages corresponding to the notification message have been read when the notification message is deleted from the notification bar, acquiring a subtractive superscript value by subtracting the quantity of unread messages read from the superscript value of the application corresponding to the notification message if the unread messages corresponding to the notification message have been read, and updating the superscript value of the application icon and displaying as the subtractive superscript value, it is possible to solve the problem of how to update and display the subtractive superscript value according to the notification message in the notification bar, achieving the effect of determining the update of the superscript value of the application icon according to the notification message deleted in the notification bar and the quantity of unread messages read.

The following is the embodiment of the device in the present disclosure, which may be configured to carry out the embodiment of the method in the present disclosure. Please refer to the embodiment of the method in the present disclosure with regard to undisclosed details about the embodiment of the device in the present disclosure.

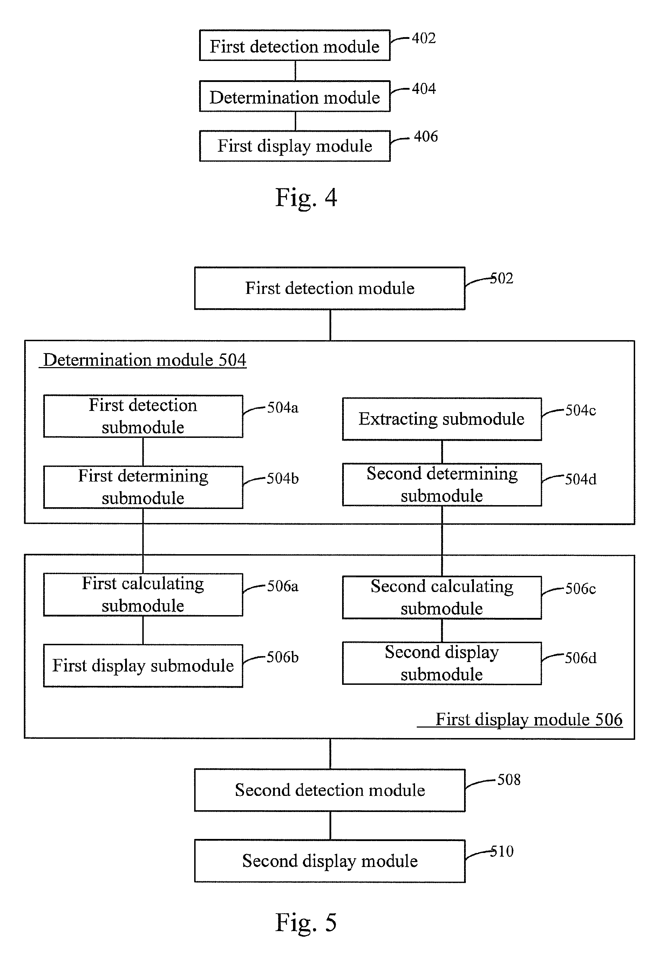

Fig. 4 is a block diagram showing a device for adding an application superscript according to an exemplary embodiment. As shown in Fig. 4, the device for adding an application superscript is applied to an electronic equipment, including a smart mobile phone, a tablet computer, a smart television, an e-book reader, a laptop computer, a desktop computer or the like. The device for adding an application superscript includes but is not limited to: a first detection module 402, a determination module 404 and a first display module 406.

The first detection module 402 is configured to detect whether a notification bar receives a notification message, and the notification message is sent by an application to the notification bar after receiving an unread message.

The determination module 404 is configured to determine, in case that the first detection module 402 detects the notification bar has received a notification message, the quantity of unread messages received by an application corresponding to the notification message according to the notification message.

The first display module 406 is configured to update and display a superscript value of the application icon according to the quantity of unread messages determined by the determination module 404.

In conclusion, in the device for adding an application superscript provided by the embodiments, by determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

Fig. 5 is a block diagram showing a device for adding an application superscript according to another exemplary embodiment. As shown in Fig. 5, the device for adding an application superscript is applied to an electronic equipment, including a smart mobile phone, a tablet computer, a smart television, an e-book reader, a laptop computer, a desktop computer or the like. The device for adding an application superscript includes but is not limited to: a first detection module 502, a determination module 504 and a first display module 506.

The first detection module 502 is configured to detect whether a notification bar receives a notification message, and the notification message is sent by an application to the notification bar after receiving an unread message.

The determination module 504 is configured to determine, in case that the first detection module 502 detects the notification bar has received a notification message, the quantity of unread messages received by an application corresponding to the notification message according to the notification message.

The first display module 506 is configured to update and display a superscript value of the application icon according to the quantity of unread messages determined by the determination module 504.

In a possible embodiment, the determining module 504 may include: a first detection submodule 504a and a first determining submodule 504b.

The first detection submodule 504a is configured to detect whether an application corresponding to the notification message is a specific application, and a notification message sent by the specific application to the notification bar is generated by the specific application by using unread messages received within a statistical time range and sent to the notification bar.

The first determining submodule 504b is configured to determine the quantity of unread messages as 1 according to the notification message if the first detection submodule 504a detects that the application corresponding to the notification message is not the specific application.

In a possible embodiment, the first display module 506 may include: a first calculating submodule 506a and a first display submodule 506b.

The first calculating submodule 506a is configured to acquire an accumulative superscript value by accumulating 1 to a superscript value of the application.

The first display submodule 506b is configured to update the superscript value of the application icon and display as the accumulative superscript value.

In a possible embodiment, the determination module 504 may further include: an extracting submodule 504c and a second determining submodule 504d.

The extracting submodule 504c is configured to extract a quantity keyword from the notification message if the first detection submodule 504a detects that the application corresponding to the notification message is the specific application, and the quantity keyword is configured to indicate the quantity of unread messages received by the application.

The second determining submodule 504d is configured to determine the quantity of unread messages as indicated in the notification message according to the quantity keyword.

In a possible embodiment, the first display module 506 may further include: a second calculating submodule 506c and a second display submodule 506d.

The second calculating submodule 506c is configured to acquire an additive superscript value by adding the superscript value of the application with the quantity of unread messages.

The second display submodule 506d is configured to update the superscript value of the application icon and display as the accumulative superscript value.

In a possible embodiment, the device may further include: a second detection module 508 and a second display module 510.

The second detection module 508 is configured to detect whether unread messages corresponding to the notification message have been read when the notification message is deleted from the notification bar.

The second display module 510 is configured to acquire a subtractive superscript value by subtracting the quantity of unread messages read from the superscript value of the application corresponding to the notification message if the second detection module detects that unread messages corresponding to the notification message have been read, and update the superscript value of the application icon and display as the subtractive superscript value.

In conclusion, in the device for adding an application superscript provided by the embodiments, by determining the quantity of unread messages received by an application corresponding to a notification message according to the notification message received by a notification bar, and updating a superscript value of the application according to the quantity of unread messages (i.e., adding a superscript value of the application with the quantity of unread messages, this is because after receiving unread messages, applications may send the notification bar a notification message indicating the quantity of unread messages received by applications), it is possible to solve the problem of the prior art in which a superscript for a non-system application cannot be added, achieving the effect of adding a superscript for both a non-system application icon and a system application icon.

With regard to the device in the above embodiment, detailed description of specific modes of modules for conducting operation has been made in the embodiment related to the method, no detailed illustration will be made herein.

An exemplary embodiment of the present disclosure provides a device for adding an application superscript, capable of realizing addition of an application superscript provided by the present disclosure. And the device for adding an application superscript includes: a processor and a memory configured to store executable instructions from the processor.

Wherein, the processor is configured to:
detect whether a notification bar receives a notification message, the notification message being sent by an application to the notification bar after receiving an unread message;
determine, in case of detecting the notification bar has received a notification message, the quantity of unread messages received by an application corresponding to the notification message according to the notification message; and
update and display a superscript value of the application icon according to the quantity of unread messages.

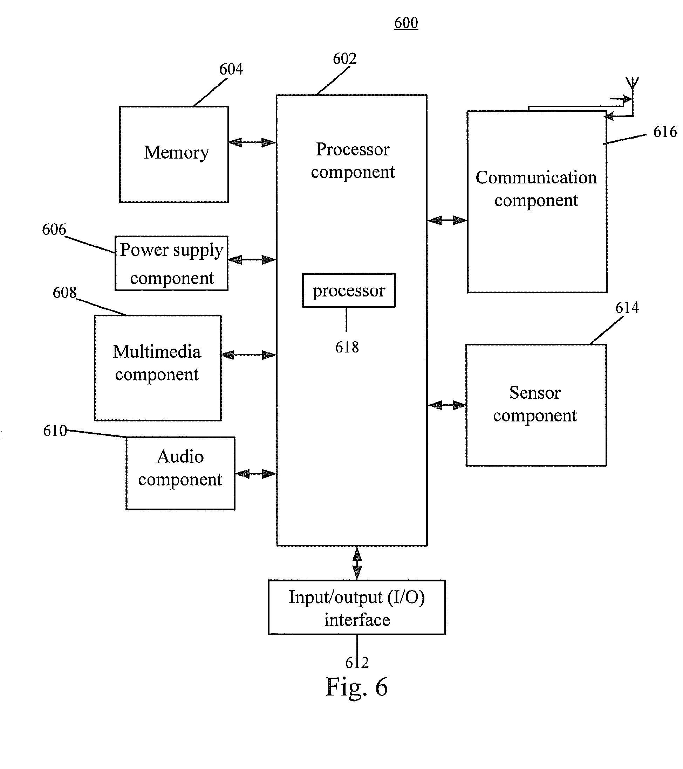

Fig. 6 is a block diagram of a device for adding an application superscript according to a further exemplary embodiment. For example, the device 600 may be a mobile telephone, a computer, a digital broadcasting terminal, a message transceiver device, a games console, a tablet device, a medical device, a fitness facility, a PDA (personal digital assistant) or the like.

Referring to Fig. 6, the device 600 may include one or a plurality of components as below: a processor component 602, a memory 604, a power supply component 606, a multimedia component 608, an audio component 610, an input/output (I/O) interface 612, a sensor component 614 and a communication component 616.

The processor component 602 usually controls the overall operation of the device 600, for example, display, telephone call, data communication, and operation associated with camera operation and record operation. The processor component 602 may include one or a plurality of processors 618 for executing instructions so as to complete steps of above method in part or in whole. In addition, the processor component 602 may include one or a plurality of modules for the convenience of interaction between the processor component 602 and other components. For example, the processor component 602 may include a multimedia module for the convenience of interaction between the multimedia component 608 and the processor component 602.

The memory 604 is configured to store data of different types so as to support the operation of the device 600. Examples of the data include any application program or approach directive for operation of the device 600, including contact data, phonebook data, message, picture and video, etc. The memory 604 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 606 provides power for components of the device 600. The power supply component 606 may include a power management system, one or a plurality of power supplies, and other components associated with power generation, management and distribution of the device 600.

The multimedia component 608 includes a screen provided between the device 600 and a user for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 608 includes a front-facing camera and/or a rear-facing camera. When the device 600 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 610 is configured to output and/or input audio signal. For example, the audio component 610 includes a microphone (MIC); when the device 600 is under an operation mode such as call mode, record mode and speech recognition mode, the microphone is configured to receive external audio signal. The audio signal received may be further stored in the memory 604 or sent out by the communication component 616. In some embodiments, the audio component 610 also includes a loudspeaker for outputting audio signal.

The I/O interface 612 provides interface for the processor component 602 and peripheral interface modules, the peripheral interface modules may be a keyboard, a click wheel and buttons, etc. These buttons may include but not limited to: home button, volume button, start button and locking button.

The sensor component 614 includes one or a plurality of sensors for providing the device 600 with state evaluation from all aspects. For example, the sensor component 614 may detect the on/off state of the device 600, relative positioning of components, for example, the components are the displayer and keypads of the device 600; the sensor component 614 also may detect the position change of the device 600 or a component thereof, the presence or absence of users' touch on the device 600, the direction or acceleration/deceleration of the device 600, and temperature variation of the device 600. The sensor component 614 may also include a proximity detector, which is configured to detect the presence of nearby objects in case of no physical touch. The sensor component 614 may also include an optical sensor, for example, CMOS or CCD image sensor for imaging. In some embodiments, the sensor component 614 may also include an acceleration sensor, a gyro sensor, a magnetic sensor, a pressure sensor, or a temperature sensor.

The communication component 616 is configured to facilitate wired communication or wireless communication between the device 600 and other equipment. The device 600 is available for access to wireless network based on communication standards, for example, WiFi, 2G or 3G, or combination thereof. In an exemplary embodiment, the communication component 616 receives by means of a broadcast channel the broadcast signal or broadcast-related information from external broadcast management systems. In an exemplary embodiment, the communication component 616 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 600 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 604 including instructions, above instructions may be executed by the processors 618 of the device 600 so as to achieve the above methods. For example, the non-transitory computer-readable storage medium may be ROM, random access memory (RAM), CD-ROM, a magnetic tape, a floppy disk and an optical data storage device, etc.

## Claims

1. A method for adding an application superscript, **characterized in** comprising:
detecting (101) whether a notification bar receives a notification message, the notification message being sent from an application to the notification bar after receiving an unread message;
determining (102), in case of detecting the notification bar has received a notification message, the quantity of unread messages received by an application corresponding to the notification message according to the notification message; and
updating and displaying (103) a superscript value of an icon of the application according to the quantity of unread messages.

2. The method of claim 1, wherein the step of determining the quantity of unread messages received by an application corresponding to the notification message according to the notification message comprises:
detecting (202) whether an application corresponding to the notification message is a specific application, a notification message sent from the specific application to the notification bar being generated by the specific application by using unread messages received within a statistical time range and sent to the notification bar; and
determining (203) the quantity of unread messages as 1 according to the notification message if the application corresponding to the notification message is not the specific application upon detection.

3. The method of claim 2, wherein the updating and displaying a superscript value of an icon of the application according to the quantity of unread messages comprises:
acquiring (204) an accumulative superscript value by accumulating 1 to a superscript value of the application; and
updating (205) the superscript value of the application icon and displaying as the accumulative superscript value.

4. The method of claim 2, wherein the determining the quantity of unread messages received by an application corresponding to the notification message according to the notification message further comprises:
extracting (303) a quantity keyword from the notification message if the application corresponding to the notification message is the specific application upon detection, the quantity keyword being used to indicate the quantity of unread messages received by the application; and
determining (304) the quantity of unread messages as indicated in the notification message according to the quantity keyword.

5. The method of claim 4, wherein the updating and displaying a superscript value of the application icon according to the quantity of unread messages comprises:
acquiring (305) an additive superscript value by adding the superscript value of the application with the quantity of unread messages; and
updating (306) the superscript value of the application icon and displaying as the additive superscript value.

6. The method according to any one of claims 1-5, wherein the method further comprises:
detecting (307) whether unread messages corresponding to the notification message have been read when the notification message is deleted from the notification bar;
acquiring (308) a subtractive superscript value by subtracting the quantity of unread messages read from the superscript value of the application corresponding to the notification message if unread messages corresponding to the notification message have been read upon detection; and updating the superscript value of the application icon and displaying as the subtractive superscript value.

7. A device for adding an application superscript, the device being **characterized in that** it comprises:
a first detection module (402), configured to detect whether a notification bar receives a notification message, the notification message being sent from an application to the notification bar after receiving an unread message;
a determination module (404), configured to determine, in case that the first detection module detects the notification bar has received a notification message, the quantity of unread messages received by an application corresponding to the notification message according to the notification message; and
a first display module (406), configured to update and display a superscript value of an icon of the application according to the quantity of unread messages determined by the determination module.

8. The device of claim 7, wherein the determination module comprises:
a first detection submodule (504a), configured to detect whether an application corresponding to the notification message is a specific application, a notification message sent from the specific application to the notification bar being generated by the specific application by using unread messages received within a statistical time range and sent to the notification bar; and
a first determining submodule (504b), configured to determine the quantity of unread messages as 1 according to the notification message if the first detection submodule detects that the application corresponding to the notification message is not the specific application.

9. The device of claim 8, wherein the first display module comprises:
a first calculating submodule (506a), configured to acquire an accumulative superscript value by accumulating 1 to a superscript value of the application; and
a first display submodule (506b), configured to update the superscript value of the application icon and display as the accumulative superscript value.

10. The device of claim 8, wherein the determination module further comprises:
an extracting submodule (504c), configured to extract a quantity keyword from the notification message if the first detection submodule detects that the application corresponding to the notification message is the specific application, the quantity keyword being used to indicate the quantity of unread messages received by the application; and
a second determining submodule (504d), configured to determine the quantity of unread messages as indicated in the notification message according to the quantity keyword.

11. The device of claim 10, wherein the first display module comprises:
a second calculating submodule (506c), configured to acquire an additive superscript value by adding the superscript value of the application with the quantity of unread messages; and
a second display submodule (506d), configured to update the superscript value of the application icon and display as the additive superscript value.

12. The device according to any one of claims 7-11, wherein the device further comprises:
a second detection module (508), configured to detect whether unread messages corresponding to the notification message have been read when the notification message is deleted from the notification bar; and
a second display module (510), configured to acquire a subtractive superscript value by subtracting the quantity of unread messages read from the superscript value of the application corresponding to the notification message if the second detection module detects that unread messages corresponding to the notification message have been read, and update the superscript value of the application icon and display as the subtractive superscript value.

13. A device for adding an application superscript, comprising:
a processor (602); and
a memory (604) configured to store executable instructions from the processor;
wherein, the processor being configured to perform:
detecting whether a notification bar receives a notification message, the notification message being sent from an application to the notification bar after receiving an unread message;
determining, in case of detecting the notification bar has received a notification message, the quantity of unread messages received by an application corresponding to the notification message according to the notification message; and
updating and displaying a superscript value of an icon of the application according to the quantity of unread messages.

14. A computer program including instructions for executing the steps of a method for adding an application superscript according to any one of claims 1 to 6 when said program is executed by a computer.

15. A recording medium readable by a computer and having recorded thereon a computer program including instructions for executing the steps of a remote method for adding an application superscript according to any one of claims 1 to 6.
